# EUROPEAN PATENT SPECIFICATION

(11) **EP 2 371 700 B1**
(45) Date of publication and mention of the grant of the patent: **11.06.2014**
(21) Application number: 10197427.7
(22) Date of filing: 30.12.2010
(51) Int. Cl.: B63B 1/38

(54) **Air cavity vessel**
Schiff mit Lufthohlraum
Bateau à cavité d'air

(30) Priority: 01.04.2010 KR 20100029753; 27.05.2010 KR 20100049542; 31.05.2010 KR 20100051296
(43) Date of publication of application: 05.10.2011
(73) Proprietor: DAEWOO SHIPBUILDING & MARINE ENGINEERING CO., LTD, Seoul 100-180 (KR)
(72) Inventor: Jang, Young Hun, Seoul 143-190 (KR); Park, Je Jun, 402-040, Incheon (KR); Choi, Young Bok, 435-040, Gunpo-Si, Gyeonggi-Do (KR); Sohn, Sang Youg, 122-737, Seoul (KR); Lee, Dong Kwon, 427-060, Gwacheon-Si, Gyeonggi-Do (KR); Lee, Young Man, 448-534, Yongin-Si, Gyeonggi-Do (KR)
(74) Representative: Intès, Didier Gérard André

(56) References cited:
- EP-A1- 1 361 152
- WO-A1-84/04903
- DE-U1- 9 312 269
- FR-A- 1 268 141
- GB-A- 1 190 621
- GB-A- 1 247 576

## Description

### FIELD OF THE INVENTION

The present invention relates to an air cavity vessel which forms an air cavity over the bottom of the air cavity vessel to reduce frictional resistance to water.

### BACKGROUND OF THE INVENTION

In general, when a vessel sails, frictional resistance occurs between the surface of the hull and water. Such frictional resistance represents most of resistance occurring on the hull. Therefore, reducing the frictional resistance during sailing is considered to be an important task.

As one of techniques for reducing frictional resistance of a vessel, an air cavity vessel is known. The air cavity vessel forms an air cavity by injecting air to a concave portion formed in the bottom of the air cavity vessel, thereby reducing a water contact surface area of the vessel.

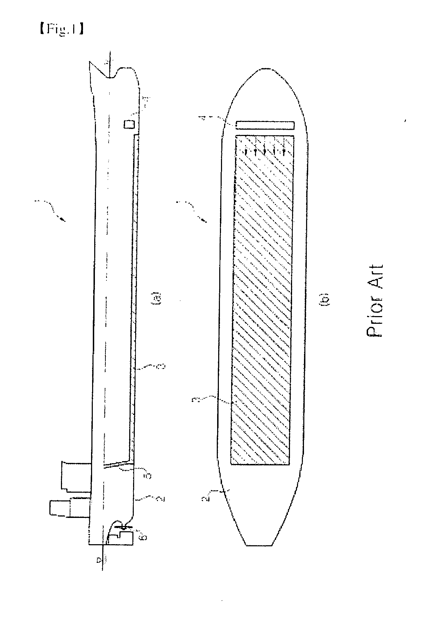

FIGS. 1A and 1B are diagrams illustrating a conventional air cavity vessel. FIG. 1A is a side view of the conventional air cavity vessel, and FIG. 1B is a bottom view of the conventional air cavity vessel.

The air cavity vessel 1 includes a concave compartment space 3 formed across the entire surface of the bottom 2 thereof and an air supply unit 4 to supply air to the compartment space 3 from the stem side thereof.

The air injected into the compartment space 3 from the air supply unit 4 forms an air layer in the compartment space 3 and reduces frictional resistance to water during the sailing of the air cavity vessel. It is known that such an air cavity reduces frictional resistance during sailing by about 10%.

When the air cavity vessel 1 rolls and pitches during the sailing, the air may escape from the air cavity. In this case, an air layer may not be formed, and the resistance may be increased by the compartment space 3 formed in the bottom 2. In order to maintain the air cavity reliably, the conventional air cavity vessel may include a plurality of longitudinal and transverse partitions which are installed to partition the compartment space 3 into a plurality of compartment;.

In the conventional air cavity vessel 1, however, since the air cavity is formed in the concave portion of the bottom 2, the displacement of the air cavity vessel decreases to reduce the buoyancy. Furthermore, since the design of the existing vessel needs to be significantly changed, there are difficulties in manufacturing the vessel. Therefore, there is a demand for a method capable of manufacturing an air cavity vessel without changing the design of the existing vessel significantly.

Meanwhile, when the air escaping from the compartment space 3 due to the sailing speed of the air cavity vessel reaches a propeller 6 positioned at the stern of the air cavity vessel, the air may have a bad effect upon the propeller 6. For example, the air may unstabilize the thrust and torque of the propeller 6. To solve such a problem, an air outlet 5 is installed in the rear side of the compartment space 3 such that the air escaping from the compartment space 3 is discharged to the surface of the water before reaching the propeller 6.

However, the air escaping from the compartment space 3 is not discharged to the surface of the water through the air outlet 5, but may be induced to the air supply unit 4. In this case, it is possible to considerably reduce the power consumption of an air compressor included in the air supply unit 4 to supply the air.

In general, an oil pressure is used to drive the transverse partitions. In this case, however, the efficiency of hydraulic control may be reduced and the inside of the air cavity vessel may be polluted by the leakage of oil. When a hydraulic system is installed, it may increase the weight of the air cavity vessel, Accordingly, since the power consumption of the air cavity vessel increases, it is highly likely that the energy is ineffectively used.

Korean Patent Laid-open Publication No. 10-2009-0116087 discloses an air cavity vessel having longitudinal and transverse partitions which are installed in a grid pattern on the bottom of the air cavity vessel and by which a plurality of space areas are formed. Each of the space areas has an air layer formed therein. In the air cavity vessel, however, large resistance occurs due to the fixed transverse partitions.

Korea Patent Laid-open Publication No. 10-2005-0016869 also discloses an air cavity vessel. The air cavity vessel includes fixed transverse partitions. Therefore, it is impossible to control the transverse partitions depending on the operation situations of the air cavity vessel. As a result, the resistance and power consumption inevitably increase.

International Patent Publication No. 84/04903 discloses a vessel with an adjustable draught, in which a recess is formed on the bottom side and a flap is mounted in the recess and which is operated by driving the flap in a vertical direction with respect to the bottom side. In order to form the recess in the existing vessel, design changes and additional operations are required. Therefore, the time and cost required for manufacturing the vessel inevitably increases. Furthermore, when the flap is in the working position, the friction between the vessel and the water becomes so large that the operation speed of the vessel decreases and the fuel consumption considerably increases. Furthermore, the flap is integrally moved between the working position and the rest position. Therefore, when the flap is applied to a large vessel, the size of the entire flap may be increased. Then, the weight of the vessel and the friction with the water may increase. In this case, the flap may be bent, and a large amount of power is required for operating the flap.

Also, document GB 1,190,621, which is considered to be the closest prior art, discloses a conventional vessel, wherein the longitudinal compartment members are parts of the hull.

### SUMMARY OF THE INVENTION

An air cavity vessel according to the present invention is as defined in the appended claims.

In particular, an embodiment of the present invention is directed to an air cavity vessel which is capable of reducing frictional resistance during the sailing of the air cavity vessel by using a simple method, without design changes for an existing air cavity vessel.

Another embodiment of the present invention is directed to an air cavity vessel which is capable of reducing power required by an air compressor which compresses air to form an air cavity.

Another embodiment of the present invention is directed to an air cavity vessel which monitors whether a proper air cavity vessel is formed or not during the sailing of the air cavity vessel, and supplies a proper amount of air.

Another embodiment of the present invention is directed to an air cavity vessel which moves transverse compartment members by using compressed air, an electromagnet, or an electromagnet and a permanent magnet, generates a circulating flow by forming a proper vortex in the rear side of the transverse compartment members, and supplies air to the circulating flow to form a proper air cavity, in order to reduce power consumption when the air cavity vessel sails or is docked.

Another embodiment of the present invention is directed to an air cavity vessel which is capable of reducing vortex resistance by properly moving transverse compartment members.

Another embodiment of the present invention is directed to an air cavity vessel which is capable of reducing frictional resistance caused by an air cavity by differentially supplying air to space areas formed on the bottom of the air cavity vessel, and capable of minimizing power required for supplying the air.

Another embodiment of the present invention is directed to an air cavity vessel includes water sealing members which are installed on movable transverse compartment members to prevent water from being introduced into a plurality of space areas for an air cavity such that the air cavity may be effectively formed in the space areas.

Another embodiment of the present invention is directed to an air cavity vessel which includes transverse concave portions formed in the bottom of the air cavity vessel so as to house transverse compartment members moved to a retreat position.

It should be understood that different embodiments of the invention are meant to be generally applicable to all aspects of the invention. Any embodiment may be combined with any other embodiment unless inappropriate. All examples are illustrative and non-limiting.

### BRIEF DESCRIPTION OF THE DRAWINGS

FIGS. 1A and 1B are side and bottom views of a conventional air cavity vessel, respectively.
FIG. 2 is a bottom view of an air cavity vessel according to an embodiment of the present invention.
FIG. 3 is a side view of the air cavity vessel according to the embodiment of the present invention.
FIGS. 4A and 4B are side views of a transverse compartment member of the air cavity vessel according to the embodiment of the present invention.
FIG. 5 is a schematic view of an air collection device of the air cavity vessel according to the embodiment of the present invention.
FIG. 6 is a diagram explaining an air supply control method in the air cavity vessel according to the embodiment of the present invention.
FIG. 7 is a schematic view of an operating unit of the transverse compartment member in the air cavity vessel according to another embodiment of the present invention.
FIGS. 8A and 8B are construction diagrams illustrating the operating unit of the transverse compartment member according to the embodiment of the present invention.
FIG. 9 is a diagram explaining a method for differentially supplying air to a plurality of space areas in the air cavity vessel according to the embodiment of the present invention.
FIGS. 10A to 10C are diagrams illustrating transverse/longitudinal compartment members and a water sealing member of the air cavity vessel according to another embodiment of the present invention.
FIGS. 11A to 11C are diagrams illustrating transverse/longitudinal compartment members and a water sealing member of the air cavity vessel according to another embodiment of the present invention, showing a case in which the transverse compartment member is divided by the longitudinal compartment member.
FIGS. 12A and 12B are diagrams illustrating an air cavity vessel having transverse grooves according to another embodiment of the present invention.

### DETAILED DESCRIPTION OF THE EMBODIMENTS

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

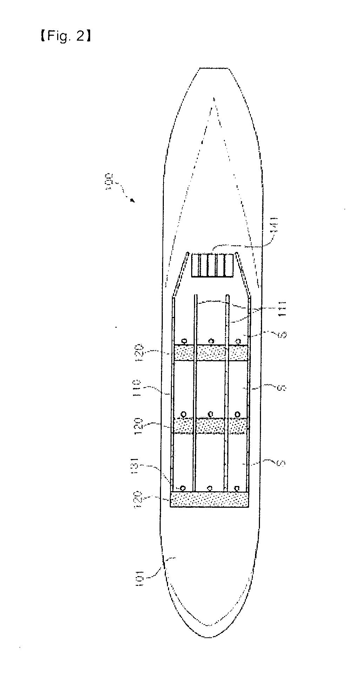

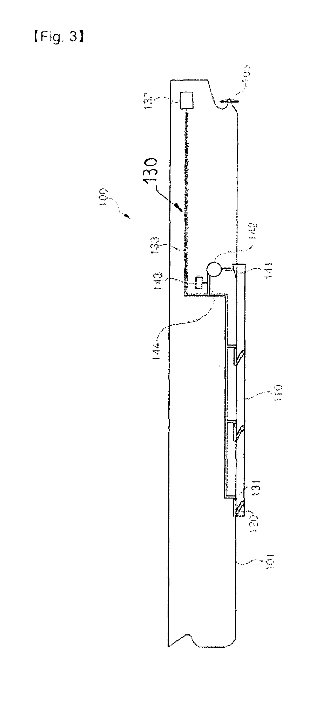

FIG. 2 is a bottom view of an air cavity vessel according to an embodiment of the present invention. FIG. 3 is a side view of the air cavity vessel according to the embodiment of the present invention.

The air cavity vessel 100 according to the embodiment of the present invention includes a structure for reducing frictional resistance to water by forming an air cavity in the bottom of the air cavity vessel. The air cavity vessel 100 is constructed in such a manner that water does not come in direct contact with the bottom 101 of the air cavity vessel but comes in contact with an air layer, while the air cavity vessel 100 sails. Therefore, since the frictional resistance to the water decreases, the fuel consumption may be reduced. In general, it is known that the reduction in the fuel consumption depending on the formation of the air cavity in the air cavity vessel ranges from 5 to 15%.

The air cavity vessel 100 according to the embodiment of the present invention is constructed in such a manner that an air cavity is formed over the surface of the bottom 101 in a state in which the surface of the bottom 101 is left as it is. Therefore, it is possible to solve a problem in the conventional air cavity vessel which requires design changes to form an air cavity in a groove hollowed out in the bottom of the air cavity vessel.

The air cavity vessel 100 includes a plurality of longitudinal compartment members 110, a plurality of longitudinal partitions 111, a plurality of transverse compartment members 120, and an air supply unit 130. The longitudinal compartment members 110, the longitudinal partitions 111, and the transverse compartment members 120 serve as compartment formation members for partitioning the bottom of the air cavity vessel to form an air cavity.

The longitudinal compartment members 110 are attached at both sides of the bottom 101, that is, the port side and the starboard side, respectively, so as to partition the bottom 101 in the longitudinal direction of the air cavity vessel. At this time, the longitudinal compartment members 110 are formed as separate members attached on the surface of the bottom 101 and projecting from the surface. Therefore, design changes of the air cavity vessel are not required.

The transverse compartment members 120 are formed to extend in the widthwise direction on the bottom 101. The transverse compartment members 120 form a plurality of space areas S for forming an air cavity in the bottom 101 through cooperating with the longitudinal compartment members 110. Since the transverse compartment members 120 are installed in the longitudinal direction so as to be spaced from each other, the plurality of space areas S are formed.

The longitudinal partitions 111 are attached between the longitudinal compartment members 110 so as to project from the bottom 101, and the space areas S may be additionally divided by the longitudinal partitions 111. The longitudinal partitions 111 serve to stably maintain the air cavity even during the rolling of the air cavity vessel.

In this embodiment, it is described that the space areas S for forming the air cavity are formed by the longitudinal compartment members 110, the longitudinal partitions 11, and the transverse compartment members 120. However, other members may be added as long as they are used to form the space areas S.

Furthermore, it is described that the longitudinal compartment member 110 and the longitudinal partition 111 are discriminated from each other. The discrimination has been simply made for convenience of description. The longitudinal partition 111 has almost the same function as the longitudinal compartment member 110 in that the longitudinal partition 111 serves to partition the bottom in the longitudinal direction. Therefore, the longitudinal partition 111 may be substituted with the longitudinal compartment member 110. That is, the space areas S may be formed by the plurality of transverse compartment members 120 and only the plurality of longitudinal compartment members 110 which are installed so as to be spaced from each other in the widthwise direction on the bottom.

The air supply unit 130 serves to supply air to the space areas S formed by the longitudinal compartment members 110, the longitudinal partitions 111, and the transverse compartment members 120 such that the air cavity may be formed between the surface of the bottom 101 and the water during the sailing. The air supply unit 130 includes a plurality of air injection nozzles 131, an air compressor 132, and an air supply pipe 133. The air injection nozzles 131 serve to supply air to the respective space areas S. The air compressor 132 serves to compress the air which is to be supplied to the air injection nozzles 131. The air supply pipe 133 serves to connect the air injection nozzles 131 and the air compressor 132. Between the air compressor 132 and the air supply pipe 133, an air storage container for containing the compressed air may be additionally provided. The plurality of the air injection nozzles 131 may be disposed in the plurality of space areas S, respectively, to supply air to the space areas S.

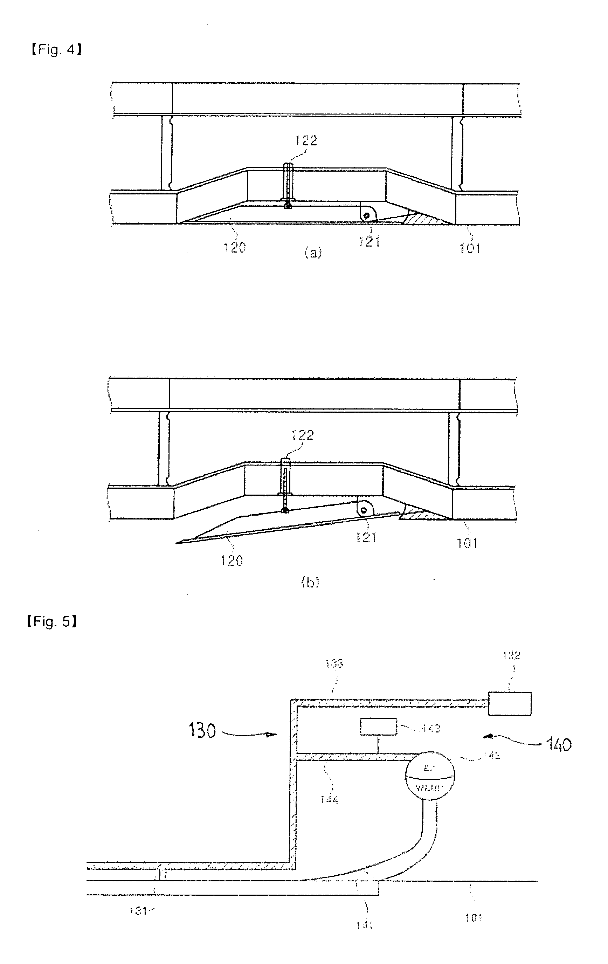

FIGS. 4A and 4B are side view of the transverse compartment member of the air cavity vessel according to the embodiment of the present invention.

When the air cavity vessel sails through stormy waves, air may escape from an air cavity due to the rolling of the air cavity vessel, which makes it difficult to form the air cavity. In this case, the air cavity may not serve to reduce frictional resistance during the sailing of the air cavity vessel, and the frictional resistance may be increased by the longitudinal compartment members 110 and the transverse compartment members 120 formed on the bottom 101 of air cavity vessel.

More specifically, since the longitudinal compartment member 110 is formed in the longitudinal direction of the air cavity vessel, it has a small effect upon the frictional resistance. However, the transverse compartment member 120 comes in contact with the water squarely, while the air cavity vessel sails. Therefore, the transverse compartment member 120 may increase the frictional resistance.

Considering this, the transverse compartment member 120 may be constructed in such a manner as to move between a retreat position and a projection position. The retreat position refers to a position where the transverse compartment member 120 is retreated at the same level as the surface of the bottom 101, and the projection position refers to a position where the transverse compartment member 120 is projected from the surface of the bottom 101. Therefore, when it is difficult to form an air cavity, for example, when the air cavity vessel sails through stormy waves, the transverse compartment member 120 may be moved to the retreat position to reduce an increase in frictional resistance which may occur when the transverse compartment member is projected from the bottom.

FIG. 4A illustrates a state in which the transverse compartment member 120 is moved to the retreat position. The bottom 101 of the air cavity vessel may include a concave portion which is formed so as to be internally curved along the widthwise direction, and the transverse compartment member 120 moved to the retreat position may be housed in the concave portion.

When the air cavity is to be formed, the transverse compartment member 120 is projected from the surface of the bottom 101 to move to the projection position, as illustrated in FIG. 4B. At this time, the transverse compartment member 120 is turned about a hinge shaft 121 from the retreat position to the projection position. The hinge shaft 121 extends in the widthwise direction in the bottom 101. The hinge shaft 121 is positioned at the front end (the stem side) of the transverse compartment member 120. Therefore, when the transverse compartment member 120 is moved to the projection position, the rear end of the transverse compartment member 120 is projected, but the front end of the transverse compartment member 120 maintains a similar level to the surface of the bottom 101. Accordingly, when the transverse compartment member 120 is moved to the projection position, a smooth streamline is formed along the transverse compartment 120, thereby reducing the frictional resistance to the water. The projection level of the transverse compartment member 120 may be controlled in the range of 0.3 m to 2.0 m.

The transverse compartment member 120 may be moved between the retreat position and the projection position by a hydraulic system or electrically powered system. For example, the transverse compartment member 120 may be turned about the hinge shaft 121 by a hydraulic jack 122.

The formation of the air cavity is affected by the sailing speed of the air cavity vessel and the projection level of the transverse compartment member 120. The transverse compartment member 120 according to the embodiment of the present invention is constructed in such a manner that the projection level from the surface of the bottom 101 may be controlled. Therefore, it is possible to provide various stages of levels suitable for the sailing speed of the air cavity vessel.

As described above, the conventional air cavity vessel includes the groove hollowed out in the bottom to form the air cavity. In the air cavity vessel according to the embodiment of the present invention, however, the air cavity is formed in the space areas formed by the longitudinal compartment members 110 and the transverse compartment members 120 which are attached to the surface of the bottom 101, in a state in which the bottom 101 is left as it is. Therefore, the air cavity vessel may be manufactured without design changes for the existing vessel. Accordingly, it is possible to considerably reduce time, effort, and cost required for manufacturing the air cavity vessel.

Furthermore, since the transverse compartment member 120 may be moved between the retreat position and the projection position depending on the sailing situations of the air cavity vessel, it is possible to substantially prevent an increase in frictional resistance of the air cavity vessel in a situation in which the air cavity is difficult to form.

Furthermore, when the transverse compartment member 120 is moved to the projection position, the projection level thereof may be controlled. Therefore, it is possible to form a proper air cavity depending on the sailing speed of the air cavity vessel.

In this embodiment, it has been described that the transverse compartment member 120 is constructed in a folding manner. However, the transverse compartment member 120 may not be constructed in a folding manner, but may be simply attached to the bottom 101 so as to project from the bottom 101, like the longitudinal compartment member 110.

FIG. 5 is a schematic view of an air collection device of the air cavity vessel according to the embodiment of the present invention. Hereinafter, referring to FIGS. 3 to 5, the construction of the air collection device will be described.

Due to the sailing speed of the air cavity vessel, air may escape from the space areas having the air cavity formed therein. In this case, when the air reaches the propeller 105 positioned at the stern of the air cavity vessel, the air may have a bad effect upon the propeller 105 and unstabilize the thrust and torque of the propeller 105. Therefore, the air escaping from the space areas needs to be absorbed before reaching the propeller 105.

The air cavity vessel 100 according to the embodiment of the present invention includes the air collection device 140 provided in the stem side thereof. The air collection device collects the air escaping from the air cavity formed in the space areas and supplies the collected air to the air injection nozzle 131.

The air collection device 140 includes an air suction port 141, a gas/liquid separator 142, an air compressor 143, and a connection pipe 144.

The air suction port 141 is installed in the stem side of the air cavity vessel 100 to suck the air escaping from the space areas. The air suction port 141 is connected to the gas/liquid separator 142 from the surface of the bottom 101. Since water as well as the air is sucked through the air suction port 141, the gas/liquid separator 142 separates the air from the water. The gas/liquid separator 142 is installed at a position which is higher by 5 cm, for example, than the surface of the bottom 101. Therefore, the air is sucked to the gas/liquid separator 142 through the air suction port 141 by a pressure difference, without a separate power supply.

The water separated by the gas/liquid separator 142 is discharged to the outside, and the air is compressed by the air compressor 143 and then supplied to the air injection nozzle 131 through the connection pipe 144. The air compressor 143 is a device for compressing the air separated by the gas/liquid separator 142 and then supplying the compressed air to the air injection nozzle 131 through the connection pipe 144. The air compressor 143 may include a compressor or pump. The connection pipe 144 connects the gas/liquid separator 142 and the air supply pipe 133, and serves as a path through which the air separated by the gas/liquid separator 142 moves.

For example, when it is assumed that the pressure at the surface of the bottom 101 is about 2 bar (gauge pressure), the pressure of the air separated by the gas/liquid separator 142 becomes about 1.5 bar. That is because, since the level of the gas/liquid separator 142 is installed at the position higher than that of the surface of the bottom 101, the water head thereof is lower by several meters than that of the surface of the bottom 101. In order for the air compressor 132 to supply air through the air injection nozzle 131, the air needs to be compressed at a pressure of 2 bar or more. However, the air separated by the gas/liquid separator 142 already has a pressure of 1.5 bar. Therefore, when only a pressure of 0.5 bar is applied to the air by the air compressor 143, the air may be supplied to the air injection nozzle 131 through the connection pipe 144 the air supply pipe 133.

The air compressor 132 requires a large amount of power to continuously compress the air at a pressure of 2 bar or more. In the conventional air cavity vessel, the air escaping from the air cavity vessel is absorbed and discharged to the surface of the water. In the embodiment of the present invention, however, the air separated by the gas/liquid separator 142 is not discharged to the outside, but only a pressure of 0.5 bar is applied to recirculate the air to the air injection nozzle 131 through the air supply pipe 133. Therefore, since the air compressor 132 may compress a smaller amount of air, it is possible to considerably reduce the power required for compressing the air.

As described above, the air collection device 140 according to the embodiment of the present invention sucks the air escaping from the space areas and substantially prevents the air from having a bad effect upon the propeller 105 when the air reaches the propeller 105. Furthermore, the air separated by the gas/liquid separator 142 is recirculated at a low pressure and supplied to the air injection nozzle 131. Therefore, it is possible to considerably reduce the power required for compressing the air.

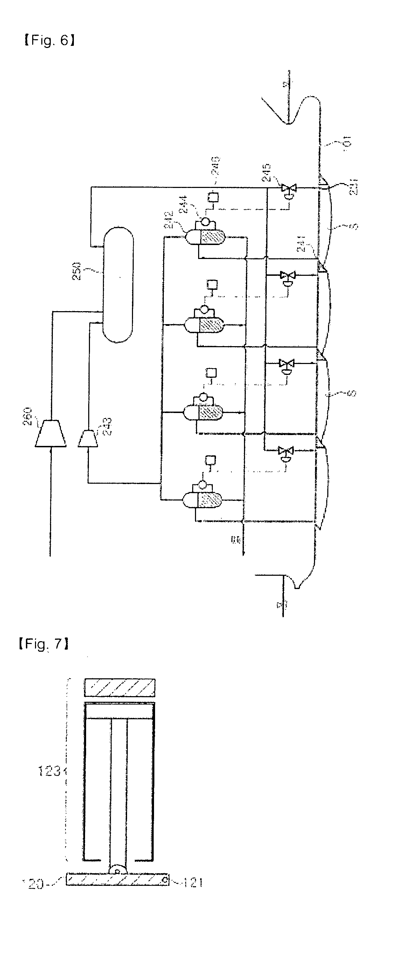

FIG. 6 is a diagram illustrating an air supply control method in the air cavity vessel according to the embodiment of the present invention.

As described above, the air cavity vessel forms the air cavity to reduce the frictional resistance to water. Therefore, it is important to monitor whether the air cavity is properly formed or not, during the sailing of the air cavity vessel.

In the conventional air cavity vessel, the air cavity is formed in the groove hollowed out in the bottom. Therefore, whether the air cavity is formed or not and the of the air cavity be monitored by simply the level of the water inside the groove. In the embodiment of the present invention, however, the surface of the bottom 101 is left as it is, and the air cavity is formed the bottom 101. Therefore, it is not easy to use a in a projection is installed on the bottom to measure the water level.

Iiv the of the present the or air is sucked the or space areas S having the air cavity formed therein, the gas/liquid separator 242 separates the air and the water from each other. Then, the level of the separated water is to monitor the air cavity is or not and the thickness of the air cavity.

First, air or water is sucked through the air suction port 241 positioned at the rear side (stem side) of each space area S. The sucked air or water is separated into water and air by the gas/liquid separator 242. Since the gas/liquid separator 242 is located at a higher position than the surface of the bottom 101, the air or water is sucked to the gas/liquid separator 242 through the air suction port 241 by a pressure difference, without a separate power supply.

The gas/liquid separator 242 determines a ratio of the sucked air and water by using a sensor. For example, a water level sensor 244 may be used to measure the water level inside the gas/liquid separator 242 to determine the ratio of water to gas. When the air cavity is normally formed in the space area S, the ratio of air in the gas/liquid separator 242 increases. On the other hand, when the air cavity is not normally formed in the space area S, the ratio of water in the gas/liquid separator 242 increases.

A control unit 246 controls an amount of air to be supplied to the space area S through the air injection nozzle 231, depending on the water level measured by the water level sensor 244. For example, when it is determined that the ratio of air in the space area S is low, the control unit 246 controls the opening rate of an air valve 245 installed at the previous stage of the air injection nozzle 231 to additionally supply air. The air valve 245 receives a signal from the water level sensor 244 such that the opening rate thereof may be automatically controlled by the control unit 246.

The air separated by the gas/liquid separator 242 is compressed by a recirculation air compressor 243 and stored in an air storage container 250. At this time, the air stored in the air storage container 250 has a pressure of 2 bar or more such that the air may be supplied to the space area S through the air injection nozzle 231. Furthermore, the air separated by the gas/liquid 242 has a pressure on 1.5 bar. Therefore, when the recirculation air compressor 243 applies only a pressure of 0.5 bar to the air, the air may be stored in the air storage container 250. Here, the recirculation air compressor 243 may include a compressor or pump.

The air storage container 250 is connected to an air compressor 260 for compressing the air which is to be supplied to the space area S through the air injection nozzle 231.

In the above-described air supply control method, air or water is sucked through the air suction port 241 installed in the rear side of the space areas and separated by the gas/liquid separator, and the ratio of air to water is determined by the water level sensor 244 installed in the gas/liquid separator 242. By controlling the opening rate of the air valve 245 connected to the air injection nozzle 231 according to the determination value of the water level sensor 244, it is possible to an amount of air, which is suitable for forming an air cavity, to the space area S.

Furthermore, the air separated by the gas/liquid separator 242 has a pressure higher than the atmospheric pressure. Therefore, when only a proper amount of pressure, for example, a pressure of 0.5 bar is additionally supplied by the recirculation air compressor 243, the air may be stored in the air storage container 250. Accordingly, it is possible to considerably reduce the power required by the air compressor 260.

The air supply control method of the air cavity vessel according to the embodiment of the present invention is applied to the air cavity vessel in which the space areas for the air cavity are formed by the compartment formation members attached on the bottom of the air cavity vessel so as to project from the bottom, in a state in which the bottom is left as it is. However, the air supply control method may be applied to the conventional air cavity vessel having the air cavity formed in the groove of the bottom.

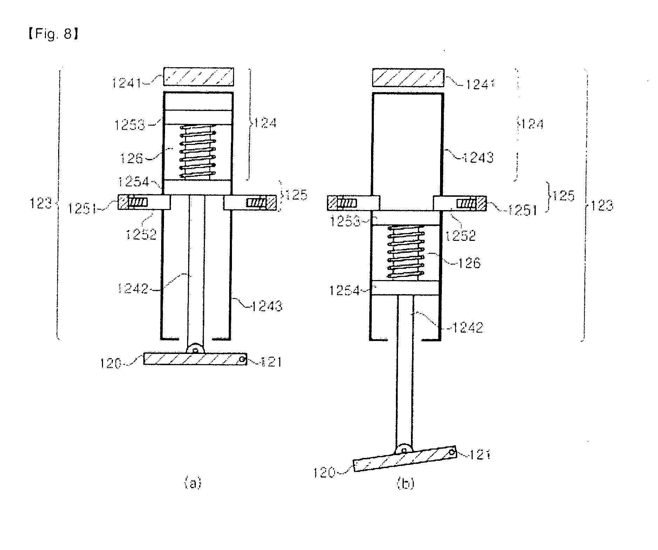

FIG. 7 is a schematic view of a movable compartment member in the air cavity vessel according to another embodiment of the present invention. FIGS. 8A and 8B are diagrams explaining the operation of the movable compartment member in detail. FIG. 4 illustrates the transverse compartment member of the air cavity vessel using a hydraulic jack, but FIGS. 7 and 8 illustrate a case in which a transverse compartment member serving as the movable compartment member is driven by an operating unit.

A hydraulic system may be to drive the transverse compartment member. In this case, however, the efficiency of hydraulic control may be reduced and the inside of the vessel may be polluted by the of oil. When the hydraulic system is installed, it may increase the weight of the air cavity vessel. Accordingly, since the power consumption of the air cavity vessel increases, it is highly likely that the energy is ineffectively used.

To solve such a problem, the air cavity vessel 100 according to the embodiment of the present invention includes a transverse compartment member 120, an operating unit 123, and a hinge unit 121, with reference to FIG. 7.

Referring to FIG. 8, the operating unit 123 may include a driving device 124 for driving the transverse compartment member 120 and a fixing device 125 for fixing the transverse compartment member 120.

The driving device 124 includes a driving operation mechanism 1241, a driving rod 1242, and a cylinder 1243, and the fixing device 124 includes a fixing operation mechanism 1251, a fixing rod 1252, an upper stopper 1253, and a lower stopper 1254.

When a magnetic force is used, the stoppers 1253 and 1254 and the fixing rod 1252 may be formed of a material attracted to the magnetic force. When compressed air is used, there is no limitation.

The driving rod 1242 may be connected to an arbitrary position of the transverse compartment member 120 by welding or the like.

The hinge unit may be implemented as a shaft 121. At this time, the transverse compartment 120 is turned about the hinge shaft 121, which extends in the widthwise direction on the bottom 101, from a retreat position to a projection position. The hinge shaft 121 is positioned at the front end (stem side) of the transverse compartment member 120. The rear end of the transverse compartment member 120 is projected at the projection position, but the front end of the transverse compartment member 120 maintains a similar level to the surface of the bottom 101.

Hereinafter, the operations of the respective components depending on sailing situations will be described, and the following descriptions will be focused on a case in which an electromagnet is used as an operational source of the driving operation mechanism and the fixing operation mechanism.

However, it will be understood by those skilled in the art that, although compressed air or a permanent magnet and an electromagnet is or are used, the driving rod 1242 may be vertically or the fixing rod 1252 may be advanced and retreated.

When the compressed air is used as an operational source of the driving operation mechanism 1241, the transverse compartment 120 may not move downward due to the compressed air existing in the cylinder, even though the weight of the transverse compartment member 120 is applied. In this case, the compressed air may be discharged or collected to move the transverse compartment member 120 downward.

Furthermore, when the permanent magnet and the electromagnet are used as an operational source of the driving operation mechanism 1241, the permanent magnet may be installed at the upper stopper 1253. In this case, when facing magnetic poles of the electromagnet and the permanent magnet are N and S (or S and N) poles, respectively, the transverse compartment member 120 will be lifted. When the facing magnetic poles of the electromagnet and the permanent magnet are N and N (or S and S) poles, respectively, the transverse compartment member 120 will be lowered.

That is, when the direction of current inputted to the driving operation mechanism 1241 is changed, the magnetic pole of the electromagnet may be switched from N pole to S pole (or from S pole to N pole) to operate the transverse compartment member 120.

Even when an electromagnet and a permanent magnet are used as an operational source of the fixing operation mechanism 1251, the operation of the fixing operation mechanism 1251 is performed in the same manner as the operation of the driving operation mechanism 1241.

Furthermore, when compressed air is used as an operational source of the driving operation mechanism 1241, the following situation needs to be considered. That is, as the position of the driving rod 1242 connected to the transverse compartment member 120 approaches the hinge shaft 121, a force to lift the transverse compartment member 120 may increase. Therefore, the position needs to be determined carefully.

However, when the electromagnet is used as an operational source of the driving operation mechanism 1241, the force to lift the transverse compartment member 120 increases as the position of the driving rod 1242 connected to the transverse compartment member 120 recedes the hinge shaft 121. This is because the movement distance of the driving rod 1242 increases. In this case, since a distance upon the magnetic force of the electromagnet has an effect may also increased, a larger amount of current needs to be supplied.

Therefore, when the operational source of the driving operation mechanism 1241 is determined, the connection of the driving rod 1242 to the transverse compartment member 120 needs to be considered together, in order to meet such demands as durability increase and power reduction.

First, the operation of the transverse compartment member 120 according to when the sailing of the air cavity vessel is stopped or the use of the transverse compartment member 120 is unnecessary will be described.

When the sailing of the air cavity vessel is stopped or the use of the transverse compartment member 120 is unnecessary, the lower stopper 1254 is fixed by the fixing rod 1252, as illustrated in F1G. 8A. Therefore, the transverse compartment member 120 is fixed at the retreat position. At this time, a current does not flow in the driving operation mechanism 124 using the electromagnet.

However, when the use of the transverse compartment member 120 is required during the sailing of the vessel, a current is applied to the fixing operation mechanism 1251 using the electromagnet, and the fixing rod 1252 is retreated. At this time, since a current does not flow in the driving operation mechanism 1241 using the electromagnet, the transverse compartment member 120 moves downward due to its weight.

When the transverse compartment member 120 reaches the projection position, the current flowing in the fixing operation mechanism 1251 using the electromagnet is cut off. Then, the fixing rod 1252 is advanced to fix the upper stopper 1253. As a result, the transverse compartment member 120 is fixed at the projection position, as illustrated in FIG. 8B.

When the sailing of the vessel is to be stopped or the use of the transverse compartment member 120 becomes unnecessary, a current is applied to the fixing operation mechanism 1251 and the driving operation mechanism 1241. Then, when the fixing rod 1252 is retreated, the transverse compartment member 120 is lifted by the driving operation mechanism 1241 using the electromagnet.

When the transverse compartment member 120 reaches the retreat position, the current flowing in the fixing operation mechanism 1251 using the electromagnet is cut off. Then, the fixing rod 1252 is advanced to fix the lower stopper 1254, as illustrated in FIG. 8A. As a result, the transverse compartment member 120 is fixed at the retreat position.

An operator determines whether the transverse compartment member 120 reaches the retreat position or the projection position, and drives the fixing operation mechanism 1251 or the driving operation mechanism 1241. However, in order to automate the operation, a limit switch may be installed at the movement limit positions of the upper and lower stoppers 1253 and 1254 inside the cylinder 1243. When a signal is received from the limit switch, the fixing rod 1252 may be automatically operated to drive or fix the transverse compartment member 120.

Furthermore, a spring 126 may be installed between the upper and lower stoppers 1253 and 1254. In this case, the spring 126 may reduce the frictional resistance to the water, which occurs when the transverse compartment member 120 is moved to the projection position during the sailing of the vessel. Accordingly, it is possible to increase the fuel efficiency of the air cavity vessel and the durability of the transverse compartment member 120 and the rods 1242 and 1252.

Furthermore, various stages of stoppers may be installed in the rods. In this case, the operator may control the movement of the transverse compartment member 120 with precision by using the various stages of stoppers.

In order to automate the driving operation, limit switches may be installed at the respective movement positions of the stoppers inside the cylinder 1243. When a signal is received from the limit switches, the fixing rod 1252 may be automatically operated to drive or fix the transverse compartment member 120.

The operation mechanisms using the electromagnet receive a driving voltage from a power supply (not shown) inside the air cavity vessel. In this case, the polarity of the driving voltage from the power supply may be switched by a converter. The converter may include an SCR converter.

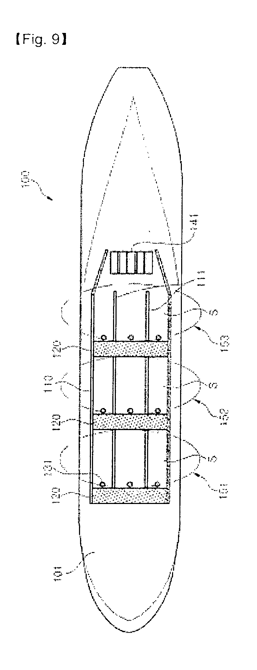

FIG. 9 is a diagram illustrating a method for differentially supplying air to the plurality of space areas in the air cavity According to the embodiment of the present invention.

In the air cavity vessel, the power consumed in supplying air to form an air cavity causes additional fuel consumption, besides the fuel consumption for me air cavity vessel. Therefore, a power reduction effect of the air cavity vessel may decrease.

Considering this, a method capable of supplying an optimal amount of air to each of the space areas may be used to form the air cavity of the air cavity vessel. In this case, it is possible to considerably reduce the power of the air cavity vessel.

In order to form an air cavity with a large area on the flat bottom of the air cavity vessel, the plurality of transverse compartment members are installed on the bottom to form the plurality of space areas. The transverse compartment members are spaced from each other in the longitudinal direction. FIG. 9 illustrates a case in which three space areas 151 to 153 are formed at the stem and stern of the air cavity vessel and between the stem and stem of the air cavity vessel, respectively.

When longitudinal partitions 111 are attached inside the longitudinal compartment members 110, a plurality of spaces areas may be additionally formed. In FIG. 9, two longitudinal partitions 111 are installed, and thus nine space areas are formed in a grid pattern.

The air cavity vessel of FIG. 9 includes the transverse compartment members 120 which are capable of forming an air cavity while inducing a vortex, the longitudinal compartment members 110 which suppress the air leakage from the air cavity, and the longitudinal partitions 111 which suppress the air leakage during the rolling of the hull. In order to form the air cavity, compressed air is supplied to the respective space areas through the air injection nozzles installed at the rear side of the transverse compartment members 120 on the bottom of the air cavity vessel.

At this time, a predetermined amount of air required for forming air cavities in the respective space areas positioned at the stem side is supplied to the space areas. When the pattern of the air cavities formed in the respective space areas is analyzed, it may be seen that the pattern of the air cavities is formed in an inverted U shape in which the air cavities formed at both sides have a larger length than the air cavity formed in the center.

Such a phenomenon occurs because the air leaks from the stem-side edges of the longitudinal compartment members 110, which are provided at both sides of the transverse space area 151 in the stem side, to the rear side of the hull along the longitudinal compartment members 110.

Of the air within the space areas positioned at both sides of the transverse space area 151 in the stem side, the air leaking to the rear side of the hull is reintroduced to both sides of the transverse space areas 152 provided between the stem side and the stern side by a vortex flow formed at both sides in the rear side of the transverse compartment member 120 provided between the stem side and the stern side.

As a result, the air introduced to both sides of the transverse space area 152 provided between the stem side and the stem side from the space areas positioned at both sides of the transverse space area 151 in the stem side contributes to forming the air cavities in the space areas positioned at both sides of the transverse space area 152. Therefore, although a smaller amount of air is supplied to the space areas positioned at both sides of the transverse space area 152 than the space areas positioned at both sides of the transverse space area 151 in the stem side, the air cavities may be formed in the space areas positioned at both sides of the transverse space area 152.

Furthermore, the air supplied to the space areas positioned at both sides of the transverse space area 152 between the stem side and the stem side is introduced into the space areas positioned at both side of the transverse space area 153 in the stem side along the longitudinal compartment member 110. Therefore, although a smaller amount of air is supplied to the space areas positioned at both sides of the transverse space area 153 in the stern side than the space areas positioned at both sides of the transverse space area 152 between the stem side and the stern side, the air cavities may be formed in the space areas positioned at both sides of the transverse space area 153.

Therefore, although the air supply amount is gradually reduced from the space areas positioned at both sides of the transverse space area 151 in the stem side toward the space areas positioned at both sides of the transverse space area 153 in the stern side, proper air cavities may be formed. Therefore, the consumption of power required for supplying air may be reduced, which makes it possible to reduce the fuel consumption of the air cavity vessel.

Depending on the sailing situations of the air cavity vessel, the air supply amount may be reduced by 40 to 80% from the space areas positioned at both sides of the transverse space area 151 in the stem side toward the space areas positioned at both sides of the transverse space area 153 in the stern side.

As described above, the air supply amounts in the space areas positioned at both sides among the space areas of the respective transverse space areas 151 to 153, which are arranged in the transverse direction, are gradually reduced the space areas in the stem side toward the space areas in the stern side. Furthermore, the air supply amounts in the space areas of the respective transverse space areas 151 to 153, which are arranged in the transverse direction, may be reduced from the transverse space area 151 in the stem side toward the transverse space area 153 in the stern side.

Furthermore, the air supply amounts in the respective space areas arranged in the longitudinal direction on the bottom of the air cavity vessel need to be reduced from the space areas in the stem side toward the space areas in the stern side.

During the sailing of the air cavity vessel, the air flowing out of the space areas in the stem side may be introduced to the space areas in the rear side of the hull, depending on unexpected situations such as rolling or requirements for the vessel operation. Therefore, the air supply amounts in the space areas arranged in the longitudinal direction as well as the air supply amounts in the space areas positioned at both sides among the space areas of the respective transverse space areas 151 to 153, which are arranged in the transverse direction, need to be reduced from the space areas in the stem side toward the space areas in the stern side.

The above-described air supply method may be applied to the air cavity vessel which forms the air cavity in the groove hollowed out in the bottom thereof as well as the air cavity vessel which forms the air cavity in the space areas formed by the longitudinal/transverse compartment members attached to the bottom thereof and projecting from the bottom.

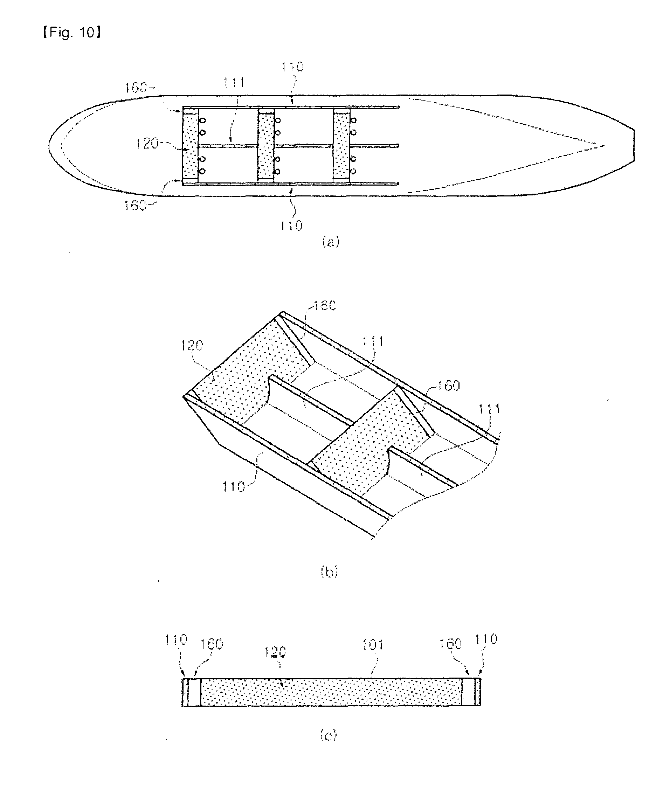

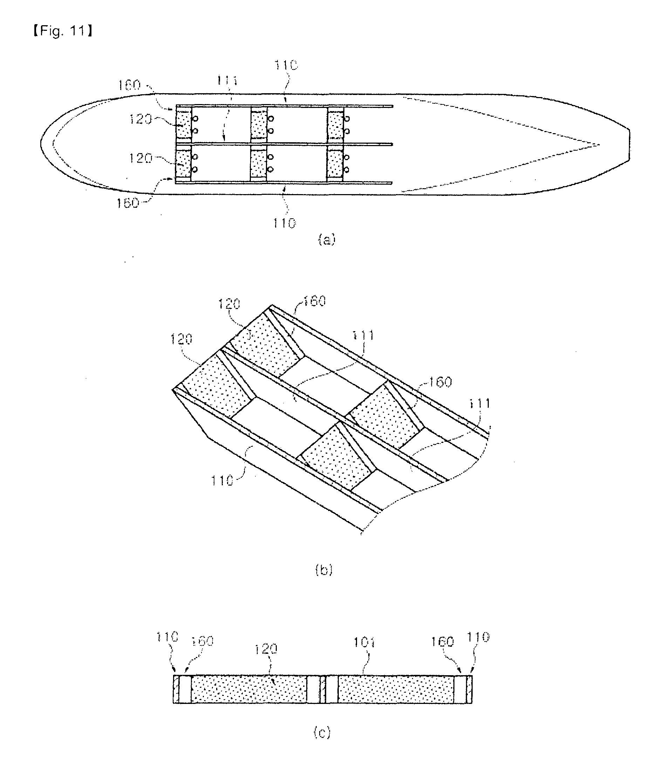

FIGS. 10 and 11 are diagrams illustrating transverse/longitudinal compartment members and a water sealing member of the air cavity vessel according to another embodiment of the present invention. FIGS. 10A and 11A are plan views of the bottom of the air cavity vessel. FIGS. 10B and 11B are perspective views of the bottom of the air cavity vessel. FIGS. 10C and 11C are front views of the bottom of the air cavity vessel.

FIGS. 10B and 10C illustrate a case in which the transverse/longitudinal compartment members are attached to the surface of the bottom 101 and the transverse compartment members 120 are projected at a predetermined angle to form space areas for air cavities. However, the embodiment of the present invention may also be applied to the air cavity vessel in which the groove is hollowed out in the bottom 101, the air cavity is formed in the groove, and the transverse compartment members 120 are driven at a predetermined angle.

When the movable transverse compartment members 120 are used in the air cavity vessel, water may be introduced into the space areas having the air cavity formed therein, through a gap between the transverse compartment member 120 and the longitudinal compartment member 110. Therefore, the water sealing member capable of sealing the gap is needed in order to increase the formation efficiency of the air cavity.

FIG. 10 illustrates a case in which only one longitudinal partition 111 is installed on the bottom 101 to form the space areas for an air cavity. However, a plurality of longitudinal partitions 111 may be installed.

Referring to FIG. 10, the air cavity vessel according to the embodiment of the present invention includes the transverse compartment members 120, the longitudinal compartment members 110, and the water sealing members 160.

Hereinafter, the respective members will be described in detail.

When the transverse compartment member 120 is projected from the flat bottom 101, a vortex flow deviating from the longitudinal end of the transverse compartment member 120 is induced, while the water flow passes along the surfaces of the bottom 101 and the transverse compartment member 120.

Accordingly, a local circulating flow is formed in the rear side of the transverse compartment member 120. When air is supplied to the circulating flow, an air cavity is formed. At this time, if a longitudinal gap exists between the transverse compartment member 120 and the longitudinal compartment member 110, the water may be introduced into the space area having the air cavity formed therein. As a result, the air cavity formation by the air supplied to the space area may not be performed effectively due to the introduced water.

To prevent the water from being introduced through the gap in the longitudinal direction, the water sealing member is installed between the transverse compartment members 120 and the longitudinal compartment member 110. When the transverse compartment 120 reaches the projection position from the retreat position, the water sealing members 120 blocks the water in the front side of the transverse compartment member 120 from being introduced to the rear side of the transverse compartment member 120. Therefore, it is possible to reliably maintain the air cavity formed in the space area of the bottom 101.

Furthermore, when the water sealing member 160 is formed of or coated with a material having a pollution-proof property and a high the water sealing performance may not only be improved, but pollutants may also be prevented from adhering.

The water sealing member 160 may be formed of plastic, rubber, or metal.

The water sealing member 160 may be installed on the transverse compartment member 120. In this case, the water sealing member 160 may be provided integrally with the transverse compartment member 120, or provided detachably from the transverse compartment member 120. When the water sealing member 160 is installed detachably from the transverse compartment member 120, the water sealing member 160 may be easily replaced in case where the water sealing member 160 is abraded or damaged.

The water sealing member 160 may be manufactured in such a manner that the transverse length thereof ranges from 5% to 15% of the transverse length of the transverse compartment member 120 and the length thereof is equal to the longitudinal length of the transverse compartment member 120, that is, the length of the transverse end of the transverse compartment member 120.

In such a structure, when the transverse compartment member 120 is moved to the retreat position, the water sealing member 160 is also moved to the retreat position. Therefore, it is possible to substantially prevent additional resistance which may be caused by the sealing member 160, when the sealing member 160 is installed on the surface of the longitudinal compartment member 110 so as to be exposed to the outside of the hull at all times, which will be described below. Furthermore, it is possible to prevent pollutants from adhering to the water sealing member 160 which is exposed to the outside at all times.

In this case, however, when the transverse compartment member 120 is driven, the water sealing members 160 is moved together at all times. Therefore, the water sealing member 160 may be easily abraded. Furthermore, since friction occurs between the water sealing member 160 and the surface of the longitudinal compartment member 110, a larger amount of power is required for driving the transverse compartment member 120 than when the water sealing member 160 is installed on the longitudinal compartment member 110.

The water sealing member 160 may be installed on the surface of the longitudinal compartment member 110. In this case, the water sealing member 160 may be provided integrally with the surface of the longitudinal compartment member 110, or provided detachably from the surface of the longitudinal compartment member 110. When the water sealing member 160 is installed detachably from the longitudinal compartment member 110, the water sealing member 160 may be easily replaced in case where the water sealing member 160 is abraded or damaged.

At this time, the water sealing member 160 is installed at the same inclination angle as that of the transverse compartment member 120 the transverse compartment member 120 is to the projection position. The water sealing member 160 may be manufactured in such a manner that the transverse length thereof ranges from 5% to 15% of the transverse length of the transverse compartment member 120 and the longitudinal length thereof is equal to the longitudinal length of the transverse compartment member 120, that is, the length of the transverse end of the transverse compartment member 120.

The water sealing member 160 may be installed on the surface of the longitudinal compartment member 110 so as to correspond to an arbitrary turning angle of the transverse compartment member 120 within the turning radius of the transverse compartment member 120. In this case, although the transverse compartment member 120 is turned according to the arbitrary angle depending on the operation situation of the air cavity vessel, the water sealing is smoothly accomplished. Therefore, the air cavity formed in the space area of the bottom 101 may be continuously maintained.

Referring to FIG. 10, the water sealing member 160 is installed to the gap between the longitudinal compartment member 110 and the transverse compartment member 120. Referring to FIG. 11, however, the transverse compartment member 120 may be separated by the longitudinal partition 111 to divide the space area of the bottom. In this case, a gap may occur between the transverse compartment member 120 and the longitudinal partition 111 as well as between the transverse compartment member 120 and the longitudinal compartment member 110. Therefore, the sealing member 160 may also be installed between the transverse compartment member 120 and the longitudinal partition 111.

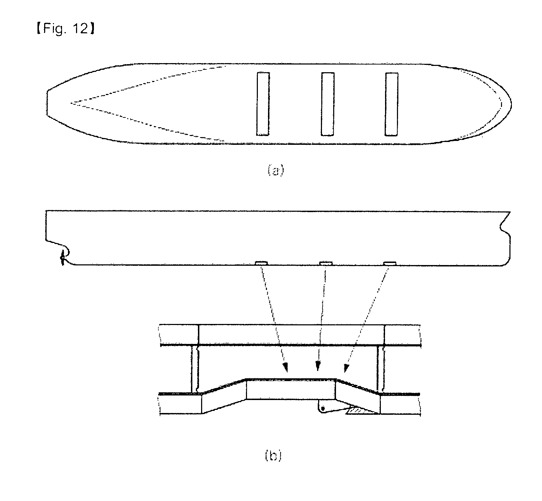

FIG. 12 is a schematic view of an air cavity vessel according to another embodiment of the present invention. FIG. 12A is a plan view of the bottom of the air cavity vessel, and FIG. 12B is an expanded view of a concaved bottom portion.

In the air cavity vessel according to the embodiment of the present invention, space areas for forming an air cavity may be formed by the longitudinal compartment members 110, the longitudinal partitions 111, and the transverse compartment member 120, which are installed on the bottom of the air cavity vessel, as illustrated in FIG. 2.

As described with reference to FIGS. 2 and 3, the space areas may be formed by installing the longitudinal compartment members 110, the longitudinal partitions 111, and the transverse compartment members 120 on the surface of the bottom 101, in a state in which the surface of the bottom 101 is left as it is. Alternatively, the space areas may be formed by installing the transverse compartment members 110, the longitudinal compartment members 111, and the transverse compartment members 120 in a groove hollowed out in the surface of the bottom 101.

In this case, the transverse compartment members 120 may be fixed to the bottom 101 or movably installed. When the transverse compartment members 120 are fixed to the bottom 101, additional resistance may be caused by the transverse compartment members 120, in case where an air cavity does not need to be formed or may not be formed due to an excessive movement of the hull, that is, large angle rolling or pitching which occurs depending on the wave state of the sea. Accordingly, the speed performance of the air cavity vessel may be reduced.

However, when the transverse compartment members 120 are movably installed, the transverse compartment members 120 may be moved to the retreat position, in case where an air cavity does not need to be formed or may not be formed. Therefore, it is possible to substantially prevent the occurrence of additional resistance.

When the transverse compartment members 120 need to be moved to the retreat position, concave portions may be formed in the surface of the bottom so as to house the transverse compartment members 120, as illustrated in FIGS. 12A and 12B. When the transverse compartment members 120 moved to the retreat position are in the concave portions, it is possible to prevent the additional resistance which may be caused by the transverse compartment members 120.

to FIGS. 12A and 12B, the concave portion may be formed in such a manner that the transverse and longitudinal lengths thereof are equal to those of the transverse compartment member 120, in order to house the entire transverse compartment member 120.

When the water sealing member 160 is installed on the transverse compartment member 120, the transverse length of the concave portion may be determined by considering the transverse length of the water sealing member 160. That is, the concave portion may be formed in such a manner that the transverse length thereof is equal to the total transverse length of the transverse compartment member 120 and the water sealing member 160.

The depth of the concave portion may be determined by considering the thickness of the transverse compartment member 120 and a hinge unit installed inside the hull. Furthermore, the depth of the concave portion may be determined by considering the turning angle of the transverse compartment member 120 such that the interference between the hull and the transverse compartment member 120 does not occur when the transverse compartment member 120 is moved to the projection position.

Furthermore, when the space areas of the bottom are partitioned in such a manner that the transverse compartment member 120 is separated by the longitudinal partition 111 as illustrated in FIGS. 11A to 11C, the concave portion may also be separated and formed in the bottom 101.

According to the embodiments of the present invention, the space areas for the air cavity vessel are formed over the bottom of the air cavity vessel without design changes for an existing vessel, which makes it possible to reduce time, effort, and cost required for manufacturing the air cavity vessel.

Furthermore, the air collection device collects the air escaping from the air cavity and supplies the collected air to the space areas. Therefore, the air may be prevented from reaching the propeller, and the power consumed by the air compressor for compressing air to form the air cavity may be reduced.

Furthermore, the air supply control system monitors whether a proper air cavity is formed or not during the sailing of the air cavity vessel, and controls the of air to be supplied to the space areas such that the air cavity may be formed properly.

Furthermore, the driving operation mechanism and the fixing operation mechanism using an electromagnet or compressed air as an operational source may drive and fix the transverse compartment member by using a small amount of power.

Furthermore, several stages of stoppers may be installed to control the transverse compartment member with precision, and a proper air cavity may be formed in a local circulating flow generated by forming a proper vortex in the rear side of the transverse compartment member.

Furthermore, the transverse compartment member may be properly moved to reduce vortex resistance, which makes it possible to reduce the power loss of the air cavity vessel.

Furthermore, even when the transverse compartment member needs to be continuously operated, only a small amount of power may be supplied to the fixing device to fix the transverse compartment member. Therefore, since a large-capacity power source for continuously operating the transverse compartment member is not needed, it is possible to reduce the power consumption of the air cavity vessel and the resistance to the water.

Furthermore, the spring may be installed on the rod so as to absorb the impact of the transverse compartment member, which is caused by the frictional resistance to the water during the sailing of the air cavity vessel. Therefore, it is possible to improve the durability of the transverse compartment member.

Furthermore, the power required for the air supply may be minimized by differentially supplying the air to the space areas formed on the bottom of the air cavity vessel. Therefore, it is possible to obtain the maximum fuel reduction effect.

Furthermore, the water sealing member may be installed to seal the gap between the transverse compartment member and the longitudinal compartment member, thereby preventing water from being introduced into the plurality of space areas for forming an air cavity. Therefore, the air cavity may be effectively formed in the space areas, and the power required for forming the air cavity may be minimized. Accordingly, it is possible to obtain the maximum fuel reduction effect.

Furthermore, the concave portions are formed in the bottom of the air cavity vessel to house the transverse compartment members. Therefore, even when the air cavity vessel does not need to be formed or may not be formed, the transverse compartment members may be moved to the retreat position. Accordingly, it is possible to reduce additional resistance caused by the transverse compartment members when the transverse compartment members are projected. As a result, the speed performance of the air cavity vessel may be improved, and the power consumption of the air cavity, vessel may be reduced.

While the present invention has been described with respect to the specific embodiments, it will be apparent to those skilled in the art that various changes and modifications may be made.

## Claims

1. An air cavity vessel (100) which forms an air cavity over the bottom (101) thereof to reduce frictional resistance to water, the air cavity vessel comprising:
a plurality of longitudinal compartment members (110) provided at both sides of the bottom (101) to partition the bottom in a longitudinal direction;
a plurality of transverse compartment members (120) extending in a widthwise direction on the bottom to form space areas (S) for the air cavity through cooperating with the longitudinal compartment members; and
an air supply unit (130) supplying air to the space areas to form the air cavity,
wherein each of the transverse compartment members (120) is movable between a retreat position where the transverse compartment member is retreated at the same level as the bottom surface (101) and a projection position where the transverse compartment member is projected from the bottom surface,
**characterized in that** the longitudinal compartment members (110) are formed as separate members which are attached on the surface of the bottom (101), and which project from said surface so that said longitudinal compartment members (110) project from the bottom of the air cavity vessel, and
the air cavity vessel (100) further comprises a water sealing member (160) installed between the transverse compartment member (120) and the longitudinal compartment member (110).

2. The air cavity vessel according to claim 1, wherein the transverse compartment member (120) is turned about a hinge shaft (121) formed in the widthwise direction on the bottom (101) so as to move between the retreat position and the projection position.

3. The air cavity vessel according to claim 1 or 2, further comprising a plurality of concave portions formed in the bottom (101) where the transverse compartment members (120) are positioned,
wherein the transverse compartment members (120) are housed in the respective concave portions, when moved to the retreat position.

4. The air cavity vessel according to any one of claims 1 to 3, wherein the transverse compartment member (120) is moved between the retreat position and the projection position by a hydraulic system or electrically powered system.

5. The air cavity vessel according to any one of claims 1 to 4, wherein the projection level of the transverse compartment member (120) from the bottom surface of the air cavity vessel is controlled.

6. The air cavity vessel according to any one of claims 1 to 5, further comprising a plurality of longitudinal partitions (111) attached between the longitudinal compartment members (110) to additionally partition the space areas and projected from the bottom (101) of the air cavity vessel.

7. The air cavity vessel according to any one of claims 1 to 6, wherein the plurality of transverse compartment members (120) are installed in the longitudinal direction and spaced from each other to partition the space areas (S).

8. The air cavity vessel according to claim 6 or 7, wherein the air supply unit supplies air to the respective space areas (S).

9. The air cavity vessel according to any one of claims 1 to 7, wherein the air supply unit (130) comprises:
a plurality of air injection nozzles (131) supplying air to the respective space areas;
a first air compressor (132) supplying air to the air injection nozzles; and
an air supply pipe (133) connecting the first air compressor and the air injection nozzles.

10. The air cavity vessel according to claim 9, further comprising an air collection device (140) collecting air escaping from the space areas (S) and supplying the collected air to the air injection nozzles (131).

11. The air cavity vessel according to claim 10, wherein the air collection device (140) comprises:
an air suction port (141) installed on the bottom to suck the air escaping from the space areas (S);
a gas/liquid separator (142) connected to the air suction port and separating the air and water; and
a second air compressor (143) compressing the air separated by the gas/liquid separator (142) and supplying the compressed air to the air injection nozzles (131) through a connection pipe (144).

12. The air cavity vessel according to claim 1, wherein the water sealing member (160) is installed at both ends of the transverse compartment member (120).

13. The air cavity vessel according to claim 1 or 12, wherein the water sealing member (160) is installed on the surface of the longitudinal compartment member (110) within a turning radius of the transverse compartment member (120).

14. The air cavity vessel according to any one of claims 1 to 13, further comprising a plurality of transverse grooves formed in the bottom (101) of the air cavity vessel so as to house the transverse compartment members (120) which are movably installed on the bottom of the air cavity vessel.

## Patentansprüche

1. Schiff mit einem Lufthohlraum (100), das einen Lufthohlraum über dem Boden (101) desselben bildet, um den Reibungswiderstand gegenüber dem Wasser zu vermindern, wobei das Schiff mit einem Lufthohlraum umfasst:
mehrere längs gerichtete Trennelemente (110), die an beiden Seiten des Bodens (101) bereitgestellt sind, um den Boden in einer Längsrichtung zu untergliedern,
mehrere quer gerichtete Trennelemente (120), die sich der Breite nach in einer Richtung auf dem Boden erstrecken, um durch ein Zusammenwirken mit den längs gerichteten Trennelementen Raumbereiche (S) für den Lufthohlraum zu bilden, und
eine Luftzuführungseinheit (130), die den Raumbereichen Luft zuführt, um den Lufthohlraum zu bilden,
wobei jede der quer gerichteten Trennelemente (120) zwischen einer zurückgezogenen Position, bei der das quer gerichtete Trennelement auf dieselbe Höhe wie die Bodenfläche (101) zurückgezogen ist, und einer überstehenden Position, bei der das quer gerichtete Trennelement von der Bodenfläche übersteht, beweglich ist,
**dadurch gekennzeichnet, dass** die längs gerichteten Trennelemente (110) als einzelne Elemente gebildet sind, die auf der Oberfläche des Bodens (101) befestigt sind und die von dieser Fläche derart überstehen, dass die längs gerichteten Trennelemente (110) von dem Boden des Schiffes mit einem Lufthohlraum überstehen, und
wobei das Schiff mit einem Lufthohlraum (100) ferner ein Wasserabdichtungselement (160) umfasst, das zwischen dem quer gerichteten Trennelement (120) und dem längs gerichteten Trennelement (110) installiert ist.

2. Schiff mit einem Lufthohlraum nach Anspruch 1, wobei das quer gerichtete Trennelement (120) um eine Gelenkwelle (121), die in der Breitenrichtung auf dem Boden (101) gebildet ist, gedreht ist, um sich zwischen der zurückgezogenen Position und der überstehenden Position zu bewegen.

3. Schiff mit einem Lufthohlraum nach Anspruch 1 oder 2, das ferner mehrere konkave Abschnitte umfasst, die in dem Boden (101) gebildet sind, wo die quer gerichteten Trennelemente (120) positioniert sind,
wobei die quer gerichteten Trennelemente (120) in den jeweiligen konkaven Abschnitten aufgenommen werden, wenn sie zu der zurückgezogenen Position bewegt werden.

4. Schiff mit einem Lufthohlraum nach einem der Ansprüche 1 bis 3, wobei das quer gerichtete Trennelement (120) zwischen der zurückgezogenen Position und der überstehenden Position durch ein hydraulisches System oder durch ein elektrisch angetriebenes System bewegt wird.

5. Schiff mit einem Lufthohlraum nach einem der Ansprüche 1 bis 4, wobei die überstehende Höhe des quer gerichteten Trennelements (120) von der Bodenfläche des Schiffs mit einem Lufthohlraum gesteuert wird.

6. Schiff mit einem Lufthohlraum nach einem der Ansprüche 1 bis 5, das ferner mehrere Längsabschnitte (111) umfasst, die zwischen den längs gerichteten Trennelementen (110) befestigt sind, um zusätzlich die Raumbereiche zu untergliedern, und die von dem Boden (101) des Schiffs mit einem Lufthohlraum überstehen.

7. Schiff mit einem Lufthohlraum nach einem der Ansprüche 1 bis 6, wobei die mehreren quer gerichteten Trennelemente (120) in der Längsrichtung installiert sind und voneinander beabstandet sind, um die Raumbereiche (S) zu untergliedern.

8. Schiff mit einem Lufthohlraum nach Anspruch 6 oder 7, wobei die Luftzuführungseinheit den jeweiligen Raumbereichen (S) Luft zuführt.

9. Schiff mit einem Lufthohlraum nach einem der Ansprüche 1 bis 7, wobei die Luftzuführungseinheit (130) umfasst:
mehrere Lufteinspritzdüsen (131), die den jeweiligen Raumbereichen Luft zuführen,
einen ersten Luftverdichter (132), der den Lufteinspritzdüsen Luft zuführt, und
ein Luftzuführungsrohr (133), das den ersten Luftverdichter und die Lufteinspritzdüsen verbindet.

10. Schiff mit einem Lufthohlraum nach Anspruch 9, das ferner eine Luftsammelvorrichtung (140) umfasst, die Luft, die aus den Raumbereichen (S) entweicht, sammelt und den Lufteinspritzdüsen (131) die gesammelte Luft zuführt.

11. Schiff mit einem Lufthohlraum nach Anspruch 10, wobei die Luftsammelvorrichtung (140) umfasst:
eine Luftansaugöffnung (141), die auf dem Boden installiert ist, um die aus den Raumbereichen (S) entweichende Luft anzusaugen,
einen Gas/Flüssigkeitsabscheider (142), der mit der Luftansaugöffnung verbunden ist und der die Luft und das Wasser trennt, und
einen zweiten Luftverdichter (143), der die von dem Gas/Flüssigkeitsabscheider (142) abgeschiedene Luft verdichtet und durch ein Verbindungsrohr (144) die verdichtete Luft den Lufteinspritzdüsen (131) zuführt.

12. Schiff mit einem Lufthohlraum nach Anspruch 1, wobei das Wasserabdichtungselement (160) an beiden Enden des quer gerichteten Trennelements (120) installiert ist.

13. Schiff mit einem Lufthohlraum nach einem Anspruch 1 oder 12, wobei das Wasserabdichtungselement (160) auf der Fläche des längs gerichteten Trennelements (110) innerhalb eines Wenderadius des quer gerichteten Trennelements (120) installiert ist.

14. Schiff mit einem Lufthohlraum nach einem der Ansprüche 1 bis 13, das ferner mehrere Quereinschnitte umfasst, die in dem Boden (101) des Schiffs mit einem Lufthohlraum gebildet sind, um die quer gerichteten Trennelemente (120), die auf dem Boden des Schiffs mit einem Lufthohlraum beweglich installiert sind, aufzunehmen.

## Revendications

1. Navire à cavité d'air (100) qui forme une cavité d'air sur le fond (101) de celui-ci afin de réduire la résistance de friction à l'eau, le navire à cavité d'air comportant :
une pluralité d'éléments longitudinaux de compartiment (110) prévus sur les deux côtés du fond (101) afin de diviser le fond dans une direction longitudinale ;
une pluralité d'éléments transversaux de compartiment (120) s'étendant dans une direction en largeur sur le fond afin de former des zones d'espace (S) pour la cavité d'air par l'intermédiaire d'une coopération avec les éléments longitudinaux de compartiment ; et
une unité d'alimentation en air (130) qui délivre de l'air aux zones d'espace afin de former la cavité d'air,
dans lequel chacun des éléments transversaux de compartiment (120) est mobile entre une position de retrait où l'élément transversal de compartiment est rétracté au même niveau que le fond (101) et une position de saillie où l'élément transversal de compartiment dépasse du fond,
**caractérisé en ce que** les éléments longitudinaux de compartiment (110) sont formés comme des éléments séparés qui sont fixés sur la surface du fond (101), et qui dépassent de ladite surface de telle sorte que lesdits éléments longitudinaux de compartiment (110) dépassent du fond du navire à cavité d'air, et
le navire à cavité d'air (100) comporte en outre un élément d'étanchéité à l'eau (160) installé entre l'élément transversal de compartiment (120) et l'élément longitudinal de compartiment (110).

2. Navire à cavité d'air selon la revendication 1, dans lequel l'élément transversal de compartiment (120) est tourné autour d'un arbre de charnière (121) formé dans la direction en largeur sur le fond (101) de façon à se déplacer entre la position de retrait et la position de saillie.

3. Navire à cavité d'air selon la revendication 1 ou 2, comportant en outre une pluralité de parties concaves formées dans le fond (101) où les éléments transversaux de compartiment (120) sont positionnés,
dans lequel les éléments transversaux de compartiment (120) sont logés dans les parties concaves respectives, lorsqu'ils sont déplacés vers la position de retrait.

4. Navire à cavité d'air selon l'une quelconque des revendications 1 à 3, dans lequel l'élément transversal de compartiment (120) est déplacé entre la position de retrait et la position de saillie par un système hydraulique ou un système alimenté de manière électrique.

5. Navire à cavité d'air selon l'une quelconque des revendications 1 à 4, dans lequel le niveau de saillie de l'élément transversal de compartiment (120) par rapport au fond du navire à cavité d'air est commandé.

6. Navire à cavité d'air selon l'une quelconque des revendications 1 à 5, comportant en outre une pluralité de cloisons longitudinales (111) fixées entre les éléments longitudinaux de compartiment (110) afin de cloisonner de manière additionnelle les zones d'espace et qui dépassent du fond (101) du navire à cavité d'air.

7. Navire à cavité d'air selon l'une quelconque des revendications 1 à 6, dans lequel la pluralité d'éléments transversaux de compartiment (120) est installée dans la direction longitudinale et les éléments sont espacés l'un de l'autre afin de cloisonner les zones d'espace (S).

8. Navire à cavité d'air selon la revendication 6 ou 7, dans lequel l'unité d'air délivre de l'air aux zones d'espace respectives (S).

9. Navire à cavité d'air selon l'une quelconque des revendications 1 à 7, dans lequel l'unité d'air (130) comporte :
une pluralité de buses d'injection d'air (131) délivrant de l'air aux zones d'espace respectives ;
un premier compresseur d'air (132) délivrant de l'air aux buses d'injection d'air ; et
un tuyau d'alimentation en air (133) reliant le premier compresseur d'air et les buses d'injection d'air.

10. Navire à cavité d'air selon la revendication 9, comportant en outre un dispositif de collecte d'air (140) qui recueille de l'air s'échappant des zones d'espace (S) et qui délivre de l'air recueilli aux buses d'injection d'air (131).

11. Navire à cavité d'air selon la revendication 10, dans lequel le dispositif de collecte d'air (140) comporte :
un orifice d'aspiration d'air (141) installé sur le fond afin d'aspirer de l'air s'échappant des zones d'espace (S) ;
un séparateur gaz/liquide (142) relié à l'orifice d'aspiration d'air et qui sépare l'air et l'eau ; et
un deuxième compresseur d'air (143) qui comprime l'air séparé par le séparateur gaz/liquide (142) et qui délivre l'air comprimé aux buses d'injection d'air (131) par l'intermédiaire d'un tuyau de raccordement (144).

12. Navire à cavité d'air selon la revendication 1, dans lequel l'élément d'étanchéité à l'eau (160) est installé aux deux extrémités de l'élément transversal de compartiment (120).

13. Navire à cavité d'air selon la revendication 1 ou 12, dans lequel l'élément d'étanchéité à l'eau (160) est installé sur la surface de l'élément longitudinal de compartiment (110) dans un rayon de rotation de l'élément transversal de compartiment (120).

14. Navire à cavité d'air selon l'une quelconque des revendications 1 à 13, comportant en outre une pluralité de rainures transversales formées dans le fond (101) du navire à cavité d'air de façon à loger les éléments transversaux de compartiment (120) qui sont installés de façon mobile sur le fond du navire à cavité d'air.
